# EUROPÄISCHE PATENTANMELDUNG

(11) **EP 4 841 118 A1**
(43) Veröffentlichungstag der Anmeldung: **18.11.2026**
(21) Anmeldenummer: 26178127.2
(22) Anmeldetag: 12.05.2026
(51) Int. Cl.: F04D 29/58, F04D 13/06, F04D 29/42, H02K 5/18, H02K 11/33

(54) **ELEKTRONIKGEHÄUSE ZUR AUFNAHME VON WÄRMEABGEBENDEN KOMPONENTEN EINER KREISELPUMPE UND KREISELPUMPE**

(30) Priorität: 15.05.2025 BE 202505310
(71) Anmelder: WILO SE, 44263 Dortmund (DE)
(72) Erfinder: Kirpo, Maksim, 44263 Dortmund (DE); Puszcz, Christian, 44263 Dortmund (DE); Karuss, Patrick, 44263 Dortmund (DE)
(74) Vertreter: Michalski Hüttermann & Partner mbB

(57) **Zusammenfassung**

Gegenstand der Erfindung ist ein Elektronikgehäuse (2) zur Aufnahme von wärmeabgebenden Komponenten (5) einer Kreiselpumpe (1), das Elektronikgehäuse (2) umfassend eine Wandung (10) und eine an der Wandung (10) zum Kühlen der wärmeabgebenden Komponenten (5) vorgesehene Kühlrippenstruktur (20), wobei
die Kühlrippenstruktur (20) von der Wandung (10) vorstehende erste Kühlrippen (21) umfasst, die längs der Wandung zumindest abschnittsweise in einem ersten Winkel (W1) von 45° ± 15° zu einer ersten Erstreckungsrichtung (X1) der Wandung (10) verlaufen, und
die Kühlrippenstruktur (20) separat von den ersten Kühlrippen (21) von der Wandung (10) vorstehende zweite Kühlrippen (22) umfasst, die längs der Wandung (10) zumindest abschnittsweise in einem von dem ersten Winkel (W1) unterschiedlichen zweiten Winkel (W2) zu der ersten Erstreckungsrichtung (X1) verlaufen.

## Beschreibung

Die Erfindung betrifft ein Elektronikgehäuse zur Aufnahme von wärmeabgebenden Komponenten einer Kreiselpumpe, wobei das Elektronikgehäuse eine Wandung und eine an der Wandung zum Kühlen der wärmeabgebenden Komponenten vorgesehene Kühlrippenstruktur umfasst, und wobei die Kühlrippenstruktur von der Wandung vorstehende Kühlrippen, insbesondere erste Kühlrippen, umfasst.

Bei Elektronikgehäusen für Kreiselpumpen wird beispielsweise zumindest ein Teil der Wärmeabfuhr der wärmeabgebenden Komponenten konvektiv über Kühlrippen an einer Wandung des Elektronikgehäuses realisiert. Es herrscht zunehmend Bedarf, Elektronikgehäuse bzw. Kreiselpumpen an sich kleiner zu konstruieren.

Ausgehend von dieser Situation ist es eine Aufgabe der vorliegenden Erfindung, die Wärmeabgabeleistung bei den Elektronikgehäusen zu erhöhen und dabei gleichwohl eine wirtschaftliche Herstellbarkeit zu erreichen.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch ein Elektronikgehäuse zur Aufnahme von wärmeabgebenden Komponenten einer Kreiselpumpe, das Elektronikgehäuse umfassend eine Wandung und eine an der Wandung zum Kühlen der wärmeabgebenden Komponenten vorgesehene Kühlrippenstruktur, wobei
die Kühlrippenstruktur von der Wandung vorstehende erste Kühlrippen umfasst, die längs der Wandung zumindest abschnittsweise in einem ersten Winkel von 45° ± 25° oder 45° ± 15° oder 45° ± 5° zu einer ersten Erstreckungsrichtung der Wandung verlaufen, und
die Kühlrippenstruktur separat von den ersten Kühlrippen von der Wandung vorstehende zweite Kühlrippen umfasst, die längs der Wandung zumindest abschnittsweise in einem von dem ersten Winkel unterschiedlichen zweiten Winkel zu der ersten Erstreckungsrichtung verlaufen.

In anderen Worten, beispielsweise, wird ein Elektronikgehäuse einer Kreiselpumpe vorgeschlagen, bei dem ein Verlauf von einer ersten Gruppe an Kühlrippen schräg zu einer Außenseite des Elektronikgehäuses bzw. schräg zu einer Erstreckungsrichtung einer Wandung des Elektronikgehäuses vorliegt, und bei dem ein Verlauf von einer zweiten Gruppe an Kühlrippen schräg zu dem Verlauf der ersten Gruppe vorliegt.

Ein wesentlicher Punkt der Erfindung ist, dass bei einer mit dem Elektronikgehäuse versehenen Kreiselpumpe in verschiedenen Einbaulagen, bei denen die Schwerkraftrichtung im Grunde quer oder parallel zu einer Erstreckungsrichtung der Wandung verläuft, eine besonders effektive natürliche Konvektion erreicht wird, gerade weil zusätzlich die zweiten Kühlrippen vorgesehen sind. Die Kreiselpumpe kann mit zumindest im Wesentlichen vertikal orientierter Wandung verschieden orientiert eingebaut werden, ohne dass alle Kühlrippen für die natürliche Konvektion ungünstig stehen. Mit der Erfindung wurde nämlich erkannt, dass zweite Kühlrippen, die zu bereits schräg verlaufenden ersten Kühlrippen schräg verlaufen, in den üblichen Einbaulagen typischerweise die Kühlleistung verbessern. Bei bekannten Lösungen ist es nämlich meist nur so, dass die Kühlrippen bzw. ersten Kühlrippen zwar schräg verlaufen, aber dass auf diese Weise in manchen Einbaulagen die natürliche Konvektion geschwächt ist.

Die Erfindung schlägt im Grunde mindestens zwei Hauptorientierungsrichtungen der Kühlrippen an der Wandung vor, wobei die erste Hauptorientierungsrichtung schräg zu einer Seite des Elektronikgehäuses ist, und wobei die zweite Hauptorientierungsrichtung schräg zur ersten Hauptorientierungsrichtung ist. Damit entstehen zwei Gruppen an Kühlrippen, hier genannt "erste Kühlrippen" und "zweite Kühlrippen", die jeweils die natürliche Konvektion effektiv ausnutzen und damit die Kühlleistung steigern können.

Das hier betrachtete Elektronikgehäuse kann wärmeabgebende Komponenten einer Kreiselpumpe zumindest teilweise oder vollständig aufnehmen bzw. einhausen. Beispielsweise handelt es sich bei den Komponenten um Steuerungselektronik, Chip(s), Spannungswandler, Frequenzumrichter, und/oder dergleichen. Das Elektronikgehäuse bildet beispielsweise zumindest einen Teil eines Aufnahmeraums für die Komponenten. Typischerweise ist das Elektronikgehäuse struktureller Bestandteil der Kreiselpumpe. Das Elektronikgehäuse kann einen Anschlussbereich zum elektrischen Anschluss der Komponenten bzw. der Kreiselpumpe bereitstellen. Der Anschlussbereich kann auf der Wandung, angrenzend an die Wandung und/oder neben der Kühlrippenstruktur angeordnet sein. Das Elektronikgehäuse kann ein- oder mehrteilig sein.

Insbesondere weist das Elektronikgehäuse die Wandung und die Kühlrippenstruktur auf. Die Wandung ist beispielsweise im Wesentlichen viereckig oder rechteckig geformt bzw. prinzipiell mit einem Viereck oder Rechteck eingrenzbar. Die Wandung erstreckt sich beispielsweise längs zweier Erstreckungsrichtungen, wobei die zwei Erstreckungsrichtungen senkrecht zueinander verlaufen. Die Wandung ist mit der Kühlrippenstruktur versehen. Beispielsweise sind die Wandung und die Kühlrippenstruktur monolithisch bzw. einstückig miteinander gebildet, insbesondere mit bzw. aus Metall, beispielsweise eine Eisenlegierung, Magnesiumlegierung, oder Aluminiumlegierung, und/oder mit bzw. aus Kunststoff, beispielsweise ein thermoplastischer und/oder duroplastischer Kunststoff.

Unter der Kühlrippenstruktur werden beispielsweise alle Kühlrippen des Elektronikgehäuses, insbesondere zumindest die an der Wandung angeordneten Kühlrippen, verstanden. Die Kühlrippen der Kühlrippenstruktur werden z.B. als "erste", "zweite", "dritte", "vierte", "fünfte", etc. Kühlrippen bezeichnet, wobei die jeweilige Bezeichnung typischerweise die jeweilig individuelle Orientierung der Kühlrippen impliziert. Es können grundsätzlich zwei oder mehr verschieden bezeichnete Kühlrippen vorgesehen sein; in manchen Ausführungen können drei, vier oder mehr verschieden bezeichnete Kühlrippen vorgesehen sein. Anders gesagt können erste, zweite, dritte, vierte, fünfte, und weitere Kühlrippen vorgesehen sein.

Gleich bezeichnete Kühlrippen sind also untereinander beispielsweise zumindest im Wesentlichen einheitlich/gleichsinnig orientiert bzw. zumindest im Wesentlichen parallel zueinander orientiert. In manchen Ausführungen können gleich bezeichnete Kühlrippen zueinander unterschiedlich orientiert vorliegen, wobei der jeweilig bezeichnete Winkel, z.B. der erste Winkel, als Durchschnittswert aller Winkel einzelner Kühlrippen berechnet wird; beispielsweise können zueinander unterschiedlich orientierte Kühlrippen gleich bezeichnet sein, wenn deren Winkeldifferenz zueinander höchstens 15° oder höchstens 25° oder höchstens 45° beträgt. Verschieden bezeichnete Kühlrippen sind zueinander beispielsweise verschieden, insbesondere deutlich verschieden, orientiert; beispielsweise liegen verschiedene Orientierungen, in manchen Ausführungen, bei einer Winkeldifferenz von mindestens 15° oder mindestens 25° oder mindestens 45° oder mehr vor. Bevorzugt liegen gleich bezeichnete Kühlrippen unmittelbar nebeneinander und/oder als Gruppen angeordnet vor.

Die Kühlrippen stehen typischerweise in bekannter Weise im Wesentlichen senkrecht von der Wandung ab. Die Kühlrippen verlaufen typischerweise in Richtung längs bzw. parallel zur Wandung in einem bestimmten Winkel relativ zur ersten Erstreckungsrichtung der Wandung. Die Kühlrippen können eine konvektive Wärmeabgabe von im Elektronikgehäuse eingehausten Wärmequellen wie den wärmeabgebenden Komponenten erreichen. Die Wärme wird z.B. konduktiv von der Wandung in die Kühlrippenstruktur transportiert, um konvektiv von der Kühlrippenstruktur beispielsweise an die Umgebungsluft abgegeben zu werden. So können die Komponenten mittels der Kühlrippenstruktur gekühlt werden.

Die ersten Kühlrippen stehen von der Wandung vor und verlaufen längs der Wandung zumindest abschnittsweise insbesondere in dem ersten Winkel von 45° ± 25° oder 45° ± 15° oder 45° ± 5° zu einer/der ersten Erstreckungsrichtung der Wandung. Anders gesagt, beispielsweise, verlaufen die ersten Kühlrippen schräg zu einer Außenseite des Elektronikgehäuses, und zwar in einem Winkel von etwa 45° dazu.

Die zweiten Kühlrippen stehen separat von den ersten Kühlrippen von der Wandung vor und verlaufen längs der Wandung zumindest abschnittsweise insbesondere in dem von dem ersten Winkel unterschiedlichen zweiten Winkel zu der ersten Erstreckungsrichtung. Anders gesagt, beispielsweise, verlaufen die zweiten Kühlrippen schräg zu den ersten Kühlrippen.

Dadurch, dass die zweiten Kühlrippen separat von den ersten Kühlrippen von der Wandung vorstehen, wird eine räumliche Trennung erreicht. Separat von der Wandung vorstehende Kühlrippen können über die Wandung miteinander verbunden sein. Insbesondere sind separat von der Wandung vorstehende Kühlrippen längs der Wandung beabstandet voneinander angeordnet, so dass Luft zwischen diesen fließen oder zirkulieren kann.

Die hier bezeichneten Winkel werden in der Regel, in Draufsicht auf die Wandung und die Kühlrippenstruktur, ausgehend von der ersten Erstreckungsrichtung und im Uhrzeigersinn angezeichnet bemessen.

Die hier betrachteten Kühlrippen erstrecken sich, in der Regel, im Verlauf längs der Wandung in einer Richtung bzw. Erstreckungsrichtung der Kühlrippen, so dass man zwischen der ersten Erstreckungsrichtung und der Erstreckungsrichtung der Kühlrippen den jeweiligen Winkel angeben kann. Es ist möglich, dass Kühlrippen sich abschnittsweise längs unterschiedlichen Richtungen erstrecken. Beispielsweise weisen manche Kühlrippen Krümmungen oder Knicke auf. Es kann beispielsweise angenommen werden, dass eine Erstreckungsrichtung einer Kühlrippe sich durch eine Ausgleichsgerade oder durch eine Richtung, längs der sich durchschnittlich mindestens ein Viertel oder eine Hälfte der Kühlrippe und/oder oder ein mittlerer Abschnitt der Kühlrippe erstreckt, bestimmen lässt. Knicke in Kühlrippen können beispielsweise beim Bestimmen der Erstreckungsrichtung der Kühlrippe bzw. des jeweiligen Winkels ausgelassen werden, beispielsweise wenn die Knicke sich nur auf einen untergeordneten Anteil, z.B. weniger als ein Viertel oder eine Hälfte, der Erstreckung beziehen.

Es kann vorgesehen sein, dass der zweite Winkel mindestens bzw. mehr als 60° oder mindestens bzw. mehr als 90° beträgt. Bevorzugt beträgt der zweite Winkel 135° ± 25° oder 135° ± 15° oder 135° ± 5°. Der so ausgewählte zweite Winkel bedeutet also eine unter Umständen stark unterschiedliche Neigung zweier Gruppen an Kühlrippen. Bei einem Winkel von z.B. 135° sind die ersten zu den zweiten Kühlrippen im Grunde gespiegelt bezüglich der ersten Erstreckungsrichtung und/oder quer zueinander orientiert. Diese Ausgestaltung erlaubt eine gezielte Luftführung und fördert eine verbesserte Ableitung der Wärme über die Kühlrippen.

Es kann vorgesehen sein, dass - beispielsweise mehrere oder alle - Enden der ersten Kühlrippen und Enden der zweiten Kühlrippen in einer senkrecht zu der ersten Erstreckungsrichtung verlaufenden zweiten Erstreckungsrichtung der Wandung voneinander beabstandet sind, insbesondere um einen im Wesentlichen in der ersten Erstreckungsrichtung verlaufenden Spalt zu bilden. Es ist möglich, dass mehrere oder alle erste Kühlrippen längs der zweiten Erstreckungsrichtung zu mehreren oder allen der zweiten Kühlrippen beabstandet sind. So kann eine Art Kamin zwischen den ersten und zweiten Kühlrippen erhalten werden, der längs der ersten Erstreckungsrichtung verläuft, der die konvektive Kühlleistung verbessern kann.

Es kann vorgesehen sein, dass die Kühlrippenstruktur separat von den zweiten Kühlrippen von der Wandung vorstehende dritte Kühlrippen und optional weitere Kühlrippen umfasst, die zumindest abschnittsweise in einem dritten Winkel bzw. weiteren Winkel zu der ersten Erstreckungsrichtung verlaufen. Der dritte Winkel bzw. weitere Winkel ist vorzugsweise von dem zweiten Winkel oder einem anderen Winkel unterschiedlich. Beispielsweise beträgt der dritte Winkel 45° ± 25° oder 45° ± 15° oder 45° ± 5° und/oder entspricht dem ersten Winkel. Die Wandung kann zwischen den ersten und den dritten Kühlrippen bzw. weiteren Kühlrippen einen kühlrippenfreien Anlagebereich zur Anlage eines Motorgehäuses aufweisen. Am Anlagebereich kann das Motorgehäuse befestigt sein. Die dritten Kühlrippen bzw. weiteren Kühlrippen können längs der Wandung von den ersten Kühlrippen beabstandet sein, beispielsweise um einen oder mehrere Millimeter oder einen oder mehrere Zentimeter, um separate Bereiche mit Kühlrippen und/oder den Anlagebereich zu bilden. Die dritten Kühlrippen bzw. die weiteren Kühlrippen können bezüglich des Motorgehäuses gegenüberliegend von den ersten Kühlrippen angeordnet sein. Die dritten Kühlrippen und ggf. weitere Kühlrippen schaffen weitere Kühlleistung und ermöglichen eine gezielte Strömung auch in bisher unversorgte Bereiche.

Es kann vorgesehen sein, dass die Kühlrippenstruktur, insbesondere die ersten Kühlrippen, die zweiten Kühlrippen und ggf. die dritten Kühlrippen bzw. weitere Kühlrippen, einen/den von kühlrippenfreien Anlagebereich zur Anlage eines Motorgehäuses umgeben und vorzugsweise, z.B. längs der Wandung, von dem Anlagebereich und vorzugsweise zueinander beabstandet sind. Im Grunde kann der Anlagebereich von der Kühlrippenstruktur umgeben sein. Die Umfassung des Anlagebereichs erlaubt eine gezielte Wärmeabfuhr und effektive Nutzung der Fläche der Wandung.

Es kann vorgesehen sein, dass Enden bestimmter Kühlrippen (z.B. der ersten/zweiten/dritten/etc. Kühlrippen) zu Enden anderer bestimmter Kühlrippen (z.B. anderen der ersten/zweiten/dritten/etc. Kühlrippen) voneinander beabstandet sind, beispielsweise in Richtung längs der ersten und/oder längs der zweiten Erstreckungsrichtung. Beispielsweise ist es möglich, dass Enden der zweiten Kühlrippen und Enden der dritten Kühlrippen in der ersten Erstreckungsrichtung voneinander beabstandet sind, um einen in der senkrecht zur ersten Erstreckungsrichtung verlaufenden zweiten Erstreckungsrichtung verlaufenden weiteren Spalt zu erzeugen. Es ist möglich, dass mehrere oder alle zweiten Kühlrippen längs der ersten Erstreckungsrichtung zu mehreren oder allen der dritten Kühlrippen beabstandet sind. So kann eine Art Kamin zwischen den zweiten und dritten Kühlrippen erhalten werden, der längs der zweiten Erstreckungsrichtung verläuft, der die konvektive Kühlleistung verbessern kann. Insbesondere kann der weitere Spalt in Kombination mit dem Spalt ermöglichen, dass in unterschiedlichen Einbaulagen eine gute Kühlwirkung vorliegt. Die dritten Kühlrippen können in gleicher Weise von weiteren Kühlrippen beabstandet sein, um einen weiteren Spalt bzw. Kamin zu bilden.

Es kann vorgesehen sein, dass Enden der Kühlrippen, beispielsweise die Enden der Kühlrippen, insbesondere in einer Draufsicht auf die Wandung gesehen, jeweils einen Knick bzw. Knicke aufweisen, insbesondere um im Wesentlichen rechtwinklig zu einem Rand der Wandung auszulaufen. Insoweit können einzelne, mehrere oder alle Kühlrippen Endabschnitte aufweisen, die im Wesentlichen quer/senkrecht zum Rand der Wandung bzw. quer/senkrecht zu einer der Erstreckungsrichtungen verlaufen. Derartige Knicke können beispielsweise die Stabilität der Kühlrippenstruktur erhöhen und Einfluss auf die Strömung von Umgebungsluft haben, um die konvektive Kühlung zu beeinflussen.

Es kann vorgesehen sein, dass die Kühlrippenstruktur mit zumindest einem Stabilisierungselement versehen ist. Das Stabilisierungselement ist beispielsweise zumindest bereichsweise im Wesentlichen stabförmig. Das Stabilisierungselement erstreckt sich vorzugsweise ausgehend von der Wandung bis hin zu einer Oberseite der Kühlrippenstruktur. Das Stabilisierungselement bildet vorzugsweise an der Oberseite eine flache Abschlussfläche aus. Das Stabilisierungselement kann monolithisch mit einer einzelnen Kühlrippe ausgebildet sein und beispielsweise seitlich von der Kühlrippe, ein oder beidseitig, vorstehen. Das Stabilisierungselement und/oder die Kühlrippen kann/können kann sich ausgehend von der Wandung bis hin zur Oberseite verjüngen, um z.B. Material zu sparen. Das Stabilisierungselement kann die Stabilität der Kühlrippenstruktur erhöhen. Die flache Abschlussfläche kann als Montagehilfsfläche zur Ablage des Elektronikgehäuses darauf und/oder zum Schutz dienen.

Es kann vorgesehen sein, dass das Elektronikgehäuse erstes Gehäuseteil und ein zweites Gehäuseteil und optional ein oder mehrere weitere Gehäuseteile umfasst. Das erste Gehäuseteil ist insbesondere wannenförmig und/oder aus Metall gebildet. Wannenförmige Metallteile lassen sich beispielsweise mittels Metall-Druckgruss erzeugen. Es ist möglich, dass das Elektronikgehäuse zumindest teilweise oder bereichsweise, beispielsweise das erste, das zweite und/oder weitere Gehäuseteile, mit bzw. aus einer Polymerzusammensetzung bzw. Kunststoff gebildet ist, beispielsweise mittels Kunststoffspritzguss. Das erste Gehäuseteil stellt bevorzugt die Wandung und die Kühlrippenstruktur monolithisch miteinander ausgebildet bereit. Das zweite Gehäuseteil und die optional weiteren Gehäuseteile ist/sind miteinander bzw. mit dem ersten Gehäuseteil verbindbar, insbesondere zur Bereitstellung eines Aufnahmeraums für die wärmeabgebenden Komponente und bevorzugt abseits von der Kühlrippenstruktur. Die Gehäuseteile können miteinander den Aufnahmeraum zumindest im Wesentlichen schließen bzw. verschließen. Die Gehäuseteile können aneinander abdichtend ausgebildet sein. Ein mehrteiliges Gehäuse ermöglicht eine gezielte Nutzung von verschiedenen Werkstoffen für das Elektronikgehäuse sowie eine einfache Montage, Demontage und Wartung. Die monolithische Herstellung des ersten Teils verbessert Wärmeleitung und Stabilität, da keine Kontaktstellen zwischen Wandung und Rippen bestehen.

Es wird ferner eine Kreiselpumpe vorgeschlagen, insbesondere eine Heizungsumwälzpumpe. Die Kreiselpumpe umfasst insbesondere das Elektronikgehäuse, ein Pumpengehäuse für ein Laufrad, ein zwischen dem Elektronikgehäuse und dem Pumpengehäuse angeordnetes Motorgehäuse zum Aufnehmen eines Elektromotors zum Antreiben des Laufrads, sowie in dem Elektronikgehäuse angeordnete und mit der Wandung wärmeleitend und mit dem Elektromotor elektrisch zu verbindende wärmeabgebende Komponenten, insbesondere leistungselektronische Bauelemente eines Frequenzumrichters der Kreiselpumpe. Optional weist die Kreiselpumpe einen Elektrolüfter auf, der zum Anströmen der Kühlrippenstruktur eingerichtet ist. Das Motorgehäuse kann das Elektronikgehäuse mit dem Pumpengehäuse verbinden. Eine Drehachse des Elektromotors verläuft beispielsweise quer bzw. zumindest im Wesentlichen senkrecht zur ersten Erstreckungsrichtung und zur zweiten Erstreckungsrichtung. Die Drehachse weist beispielsweise durch Elektronik-, Motor-, und Pumpengehäuse hindurch. Bei der Kreiselpumpe handelt es sich typischerweise um eine Nassläuferpumpe.

Im Rahmen der Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmalsoder Begriffsverwendung näher zu bringen. "Beziehungsweise" kann stets mit "und/oder" ersetzt werden.

Nachfolgend wird die Erfindung unter Bezugnahme auf die anliegenden Zeichnungen anhand bevorzugter Ausführungsbeispiele näher erläutert.

In den Zeichnungen zeigen
- Fig. 1A-B: ein Elektronikgehäuse für eine Kreiselpumpe in einer Draufsicht (1A) und in einer perspektivischen Ansicht (1B); und
- Fig. 2A-B: eine Kreiselpumpe mit dem in Fig. 1A-B gezeigten Elektronikgehäuse in einer perspektivischen Ansicht (2A) und in einer geschnittenen Seitenansicht (2B).

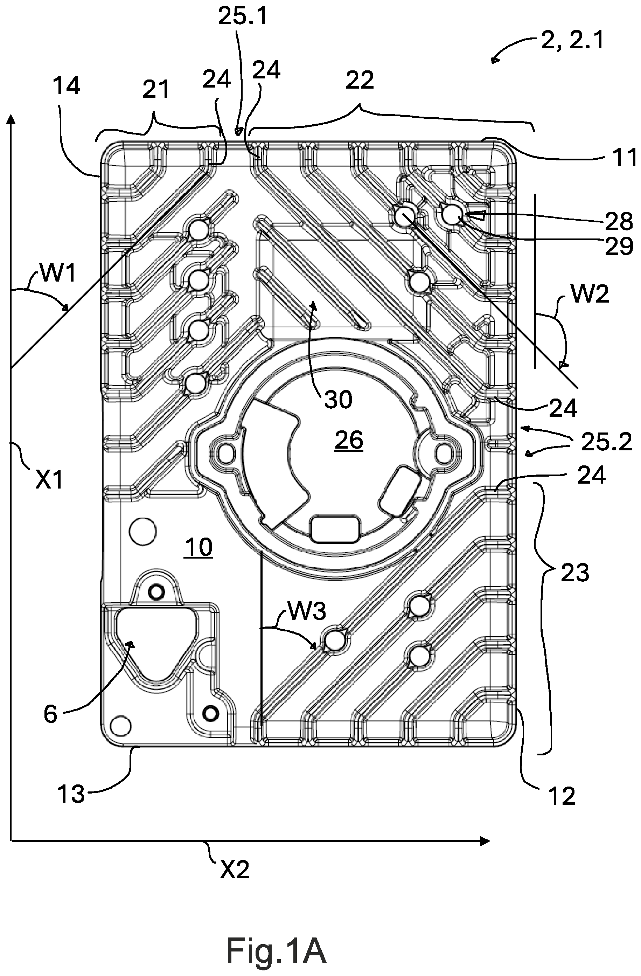

In Fig. 1A-B ist ein Elektronikgehäuse 2 zur Aufnahme von wärmeabgebenden Komponenten 5 einer Kreiselpumpe 1 gezeigt. Das Elektronikgehäuse 2 weist eine sich im Wesentlichen längs zweier Erstreckungsrichtungen X1, X2 erstreckende Wandung 10 und eine an der Wandung 10 vorgesehene Kühlrippenstruktur 20 auf. Mittels der Kühlrippenstruktur 20, können die wärmeabgebenden Komponenten 5 gekühlt werden.

Die Kühlrippenstruktur 20 weist von der Wandung 10 im Wesentlichen senkrecht und vorliegend in eine dritte Erstreckungsrichtung X1 vorstehende Kühlrippen 21, 22, 23 auf. Genauer gesagt sind erste 21, zweite 22, und dritte 23 Kühlrippen, beispielsweise als drei Gruppen verschieden orientierter Kühlrippen, vorgesehen.

Die ersten Kühlrippen 21 verlaufen zumindest abschnittsweise in einem ersten Winkel W1 von 45° ± 15° zur ersten Erstreckungsrichtung X1 der Wandung 10.

Die zweiten Kühlrippen 22 sind separat von den ersten Kühlrippen 21 angeordnet. Die zweiten Kühlrippen 22 verlaufen zumindest abschnittsweise bzw. zwischen ihren Enden 24 in einem zweiten Winkel W2 zur ersten Erstreckungsrichtung X1. Der zweite Winkel W2 unterscheidet sich von dem ersten Winkel W1 und ist vorliegend 90° größer. Der zweite Winkel W2 liegt vorliegend bei 135° ± 15°.

Vorliegend erstrecken sich die ersten Kühlrippen 21 und die zweiten Kühlrippen 22 quer, bevorzugt senkrecht, zueinander.

Die Enden 24 der ersten Kühlrippen 21 und die Enden 24 der zweiten Kühlrippen 22 verlaufen in der zur ersten Erstreckungsrichtung X1 senkrecht verlaufenden zweiten Erstreckungsrichtung X2 der Wandung 10 voneinander beabstandet. Dadurch wird ein im Wesentlichen in der ersten Erstreckungsrichtung X1 verlaufender Spalt 25.1 gebildet. Durch den Spalt 25.1 kann in der in Fig. 1A exemplarisch dargestellten Orientierung des Elektronikgehäuses, mit entgegen der ersten Erstreckungsrichtung X1 orientierten Schwerkraftrichtung, eine Art Kamin-Effekt erhalten werden, der der Kühlleistung zuträglich ist.

Die dritten Kühlrippen 23 verlaufen zumindest abschnittsweise in einem dritten Winkel W3 zur ersten Erstreckungsrichtung X1. Der dritte Winkel W3 ist vom zweiten Winkel W2 verschieden und beträgt vorliegend 45° ± 15° beträgt. Der dritte Winkel W3 entspricht dem ersten Winkel W1.

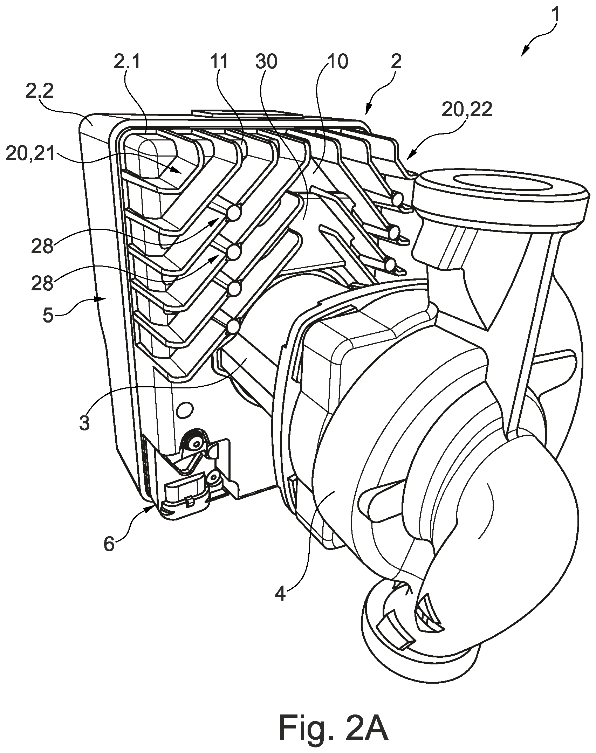

Die Wandung 10 weist zwischen den ersten 21 und den dritten 23 Kühlrippen einen kühlrippenfreien Anlagebereich 26 auf, welcher zur Anlage eines Motorgehäuses 3 dient, vgl. Fig. 2A. Die ersten Kühlrippen 21, die zweiten Kühlrippen 22 und die dritten Kühlrippen 23 umgeben den kühlrippenfreien Anlagebereich 26 der Wandung 10. Die Kühlrippen 21, 22, 23 sind vom Anlagebereich 26 beabstandet.

Der Anlagebereich 26 weist beispielsweise eine Befestigungsmöglichkeit zur Befestigung eines Motorgehäuses 3, insbesondere eine oder mehrere Bohrungen, auf.

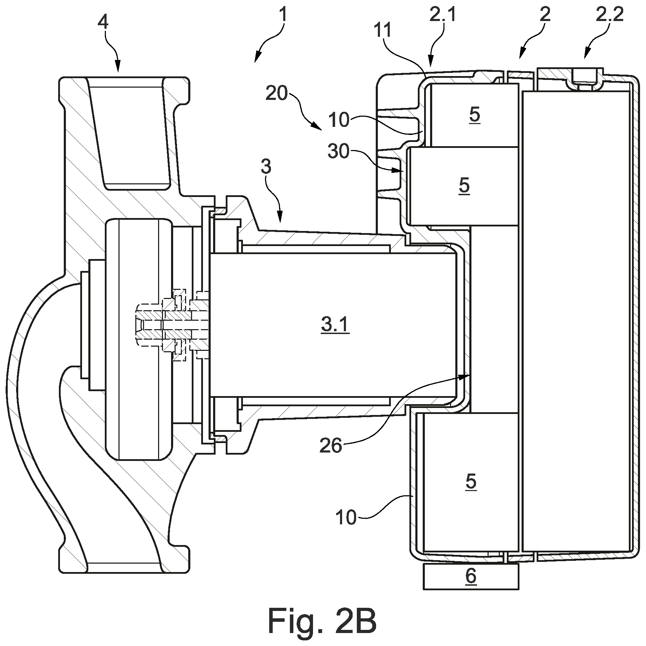

Der Anlagebereich 26 weist beispielsweise einen Durchbruch zur Durchführung von elektrischen Leitungen zu einem Elektromotor 3.1 auf, vgl. Fig. 2B.

Beispielsweise ist die Wandung 10 mit im Wesentlichen konstanter Wandstärke gebildet. Die Wandstärke beträgt beispielsweise mindestens 1 mm und höchstens 10 mm. Zum Beispiel beträgt die Wandstärke 4 mm ± 3 mm.

Die Wandung 10 weist eine Aufnahme 30 auf bzw. stellt diese bereit, die der insbesondere formschlüssigen Aufnahme von einer oder mehreren Komponenten 5 dient. Außenseitig bildet die Aufnahme 30 eine Erhöhung, vgl. z.B. Fig. 1A und Fig. 2A. Die Kühlrippen 21, 22, 23 erstrecken sich vorliegend zumindest abschnittsweise auch von der Erhöhung aus. Innenseitig bildet die Aufnahme 30 eine Vertiefung, vgl. z.B. Fig. 2B.

Ein Ende 24 von den zweiten Kühlrippen 22 und ein Ende 24 von den dritten Kühlrippen 23 sind in der ersten Erstreckungsrichtung X1 voneinander beabstandet, um einen weiteren Spalt 25.2 zu erzeugen, welcher in der senkrecht zur ersten Erstreckungsrichtung X1 verlaufenden zweiten Erstreckungsrichtung X2 liegt. Anders gesagt ist eine Lücke zwischen den zweiten 22 und dritten 23 Kühlrippen.

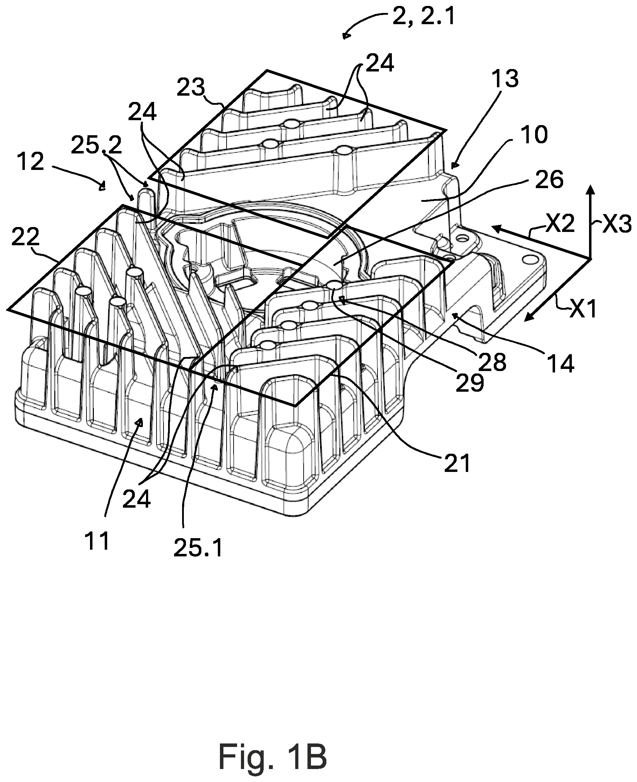

Im Bereich des weiteren Spalts 25 liegt ein einzelner Steg in der Art einer Kühlrippe vor, der im Grunde einem Ende einer Kühlrippe entspricht, der einen zum Rand 12 rechtwinklig auslaufenden Knick entspricht. Dieser einzelne Steg mag vorliegend aufgrund seiner kleinen Größe nicht als Kühlrippe verstanden werden; da seine Länge längs der Wandung 10 kleiner ist als seine Höhe, vgl. Fig. 1B.

Eine Mehrzahl an Enden 24 der Kühlrippen 21, 22, 23 weisen jeweils einen Knick auf bzw. sind mit einem Knick gebildet, so dass sie im Wesentlichen rechtwinklig zu einem Rand 11, 12, 13, 14 der Wandung 10 auslaufen. Der Knick stellt beispielsweise einen abrupten Richtungswechsel der Erstreckungsrichtung von einer Kühlrippe 21, 22, 23 dar. Der Knickt bleibt beim Bemessen des Winkels W1, W2, W3 unbeachtet, so dass lediglich der vom Rand 11, 12, 13, 14 abseits gelegene Abschnitt der Kühlrippen 21, 22, 23 hierbei berücksichtigt wird.

Die Kühlrippenstruktur 20 ist mit mehreren stabförmigen Stabilisierungselementen 28 versehen, die sich von der Wandung 10 bis zu einer Oberseite der Kühlrippenstruktur 20 erstrecken und an der Oberseite flache Abschlussflächen 29 ausbilden.

Insbesondere mit Blick auf Fig. 2A-B ist ersichtlich, dass das Elektronikgehäuse 2 ein wannenförmiges erstes Gehäuseteil 2.1 aus Metall umfasst, welches die Wandung 10 und die Kühlrippenstruktur 20 monolithisch bereitstellt. Zusätzlich ist vorliegend zweites Gehäuseteil 2.2 vorgesehen, das mit dem ersten Gehäuseteil 2.1, insbesondere fluiddicht und insbesondere abseits der Kühlrippenstruktur 20, verbindbar ist, um einen Aufnahmeraum für die wärmeabgebenden Komponenten 5 bereitzustellen.

Das Elektronikgehäuse 2, insbesondere das erste Gehäuseteil 2.1, ist vorliegend ein Gussteil aus einer Aluminiumlegierung. Es ist möglich, dass das Elektronikgehäuse 2 zumindest teilweise oder bereichsweise mit bzw. aus Kunststoff gebildet ist.

Die in Fig. 2B gezeigte Kreiselpumpe 1 ist insbesondere eine Heizungsumwälzpumpe. Im Elektronikgehäuse 2 sind als wärmeabgebende Komponenten 5 leistungselektronische Bauelemente eines Frequenzumrichters angeordnet. Die Komponenten 5 sind wärmeleitend mit der Wandung 10 verbunden, liegen also beispielsweise daran an. Im am Elektronikgehäuse 2 bzw. am Anlagebereich 26 befestigten Motorgehäuse 3 ist ein Elektromotor 3.1 angeordnet, der mit den Komponenten 5 elektrisch verbunden ist bzw. von diesen gesteuert und versorgt wird. Im am Motorgehäuse 3 befestigten Pumpengehäuse 4 ist ein nicht detailliert gezeigtes Laufrad zum Fördern eines Fluids angeordnet. Das Pumpengehäuse 4 stellt einen Einlass und einen vorliegend abgewandt vom Einlass liegenden Auslass für das Fluids bereit.

Optional ist ein Elektrolüfter 6 vorgesehen, der zur Anströmung der Kühlrippenstruktur 20 eingerichtet ist.

Optional stellt das Elektronikgehäuse 2 einen Anschlussbereich 6 zum elektrischen Anschluss der Komponenten 5 bzw. der Kreiselpumpe 1 bereit. Das Elektronikgehäuse 2 kann einen Rücksprung und/oder Durchbruch für den Anschlussbereich 6 aufweisen, beispielsweise um einen elektrischen Anschluss aufzunehmen.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Kreiselpumpe | 1 |
| Elektronikgehäuse | 2 |
| erstes Gehäuseteil | 2.1 |
| zweites Gehäuseteil | 2.2 |
| Motorgehäuse | 3 |
| Elektromotor | 3.1 |
| Pumpengehäuse | 4 |
| wärmeabgebende Komponente | 5 |
| Anschlussbereich | 6 |
| Wandung | 10 |
| Rand der Wandung | 11-14 |
| Kühlrippenstruktur | 20 |
| erste Kühlrippen | 21 |
| zweite Kühlrippen | 22 |
| dritte Kühlrippen | 23 |
| Enden der Kühlrippen | 24 |
| Spalt | 25 |
| Anlagebereich | 26 |
| Stabilisierungselement | 28 |
| Abschlussfläche | 29 |
| Aufnahme | 30 |
| erste Erstreckungsrichtung | X1 |
| zweite Erstreckungsrichtung | X2 |
| erster Winkel | W1 |
| zweiter Winkel | W2 |
| dritter Winkel | W3 |

## Patentansprüche

1. Elektronikgehäuse (2) zur Aufnahme von wärmeabgebenden Komponenten (5) einer Kreiselpumpe (1), das Elektronikgehäuse (2) umfassend eine Wandung (10) und eine an der Wandung (10) zum Kühlen der wärmeabgebenden Komponenten (5) vorgesehene Kühlrippenstruktur (20), wobei
die Kühlrippenstruktur (20) von der Wandung (10) vorstehende erste Kühlrippen (21) umfasst, die längs der Wandung zumindest abschnittsweise in einem ersten Winkel (W1) von 45° ± 15° zu einer ersten Erstreckungsrichtung (X1) der Wandung (10) verlaufen, und
die Kühlrippenstruktur (20) separat von den ersten Kühlrippen (21) von der Wandung (10) vorstehende zweite Kühlrippen (22) umfasst, die längs der Wandung (10) zumindest abschnittsweise in einem von dem ersten Winkel (W1) unterschiedlichen zweiten Winkel (W2) zu der ersten Erstreckungsrichtung (X1) verlaufen.

2. Elektronikgehäuse (2) nach dem voranstehenden Anspruch, wobei
der zweite Winkel (W2) mehr als 60° und bevorzugt 135° ± 15° beträgt,

3. Elektronikgehäuse (2) nach einem der voranstehenden Ansprüche, wobei
Enden (24) der ersten Kühlrippen (21) und Enden (24) der zweiten Kühlrippen (22) in einer senkrecht zu der ersten Erstreckungsrichtung (X1) verlaufenden zweiten Erstreckungsrichtung (X2) der Wandung (10) voneinander beabstandet sind, um einen im Wesentlichen in der ersten Erstreckungsrichtung (X1) verlaufenden Spalt (25.1) zu bilden.

4. Elektronikgehäuse (2) nach einem der voranstehenden Ansprüche, wobei
die Kühlrippenstruktur (20) separat von den zweiten Kühlrippen (22) von der Wandung (10) vorstehende dritte Kühlrippen (23) umfasst, die zumindest abschnittsweise in einem dritten Winkel (W3) zu der ersten Erstreckungsrichtung (X1) verlaufen,
der dritte Winkel (W3) von dem zweiten Winkel (W2) unterschiedlich ist, vorzugsweise 45° ± 15° zu der ersten Erstreckungsrichtung (X1) beträgt und/oder dem ersten Winkel (W1) entspricht, und
die Wandung (10) zwischen den ersten (21) und den dritten (23) Kühlrippen einen kühlrippenfreien Anlagebereich (26) zur Anlage eines Motorgehäuses aufweist.

5. Elektronikgehäuse (2) nach einem der voranstehenden Ansprüche, insbesondere nach dem voranstehenden Anspruch, wobei
die Kühlrippenstruktur (20), insbesondere die ersten Kühlrippen (21), die zweiten Kühlrippen (22) und die dritten Kühlrippen (23), einen/den kühlrippenfreien Anlagebereich (26) der Wandung (10) zur Anlage eines Motorgehäuses umgibt/umgeben und vorzugsweise von dem Anlagebereich (26) beabstandet sind.

6. Elektronikgehäuse (2) nach einem der voranstehenden Ansprüche, insbesondere nach einem der zwei voranstehenden Ansprüche, wobei
Enden (24) der zweiten Kühlrippen (22) und Enden (24) der dritten Kühlrippen (23) in der ersten Erstreckungsrichtung (X1) voneinander beabstandet sind, um einen in einer/der senkrecht zur ersten Erstreckungsrichtung (X1) verlaufenden zweiten Erstreckungsrichtung (X2) verlaufenden weiteren Spalt (25.2) zu erzeugen.

7. Elektronikgehäuse (2) nach einem der voranstehenden Ansprüche, wobei
(die) Enden (24) der Kühlrippen (21, 22, 23) jeweils einen Knick aufweist/aufweisen, um im Wesentlichen rechtwinklig zu einem Rand (11, 12, 13, 14) der Wandung (10) auszulaufen.

8. Elektronikgehäuse (2) nach einem der voranstehenden Ansprüche, wobei
die Kühlrippenstruktur (20) mit zumindest einem zumindest bereichsweise stabförmigen Stabilisierungselement (28) versehen ist, das sich ausgehend von der Wandung (10) bis hin zu einer Oberseite der Kühlrippenstruktur (20) erstreckt und an der Oberseite eine flache Abschlussfläche (29) ausbildet.

9. Elektronikgehäuse (2) nach einem der voranstehenden Ansprüche, umfassend
ein wannenförmiges erstes Gehäuseteil (2.1) aus Metall, das die Wandung (10) und die Kühlrippenstruktur (20) monolithisch miteinander ausgebildet bereitstellt, und
ein mit dem ersten Gehäuseteil (2.1) zur Bereitstellung eines Aufnahmeraums für die wärmeabgebenden Komponente (5) abseits von der Kühlrippenstruktur (20) verbindbares zweites Gehäuseteil (2.2).

10. Kreiselpumpe (1), insbesondere Heizungsumwälzpumpe, die Kreiselpumpe (1) umfassend
ein Elektronikgehäuse (2) nach einem der voranstehenden Ansprüche,
ein Pumpengehäuse (4) für ein Laufrad,
ein zwischen dem Elektronikgehäuse (2) und dem Pumpengehäuse (4) angeordnetes Motorgehäuse (3) zum Aufnehmen eines Elektromotors (3.1) zum Antreiben des Laufrads, und
in dem Elektronikgehäuse (2) angeordnete und mit der Wandung (10) wärmeleitend und mit dem Elektromotor (3.1) elektrisch zu verbindende wärmeabgebende Komponenten (5), insbesondere leistungselektronische Bauelemente eines Frequenzumrichters der Kreiselpumpe (1), und optional
einen Elektrolüfter, der zum Anströmen der Kühlrippenstruktur (20) eingerichtet ist.
